# FASCICULE DE BREVET EUROPEEN

(11) **EP 3 465 535 B1**
(45) Date de publication et mention de la délivrance du brevet: **06.07.2022**
(21) Numéro de dépôt: 17728193.8
(22) Date de dépôt: 06.06.2017
(51) Int. Cl.: G06V 10/141, G06V 10/143, G06V 20/59, G06V 40/18, G06V 40/16

(54) **DISPOSITIF ET MÉTHODE DE SURVEILLANCE D'UN CONDUCTEUR D'UN VÉHICULE DE TRANSPORT**
VORRICHTUNG UND VERFAHREN ZUR ÜBERWACHUNG EINES FAHRERS EINES KRAFTFAHRZEUGS
DEVICE AND METHOD FOR MONITORING A DRIVER OF A TRANSPORT VEHICLE

(30) Priorité: 06.06.2016 FR 1655149
(43) Date de publication de la demande: 10.04.2019
(73) Titulaire: Valeo Comfort and Driving Assistance, 94046 Créteil Cedex (FR)
(72) Inventeur: KOUADRI, Abdellah, 94046 Créteil Cedex (FR)
(74) Mandataire: Delplanque, Arnaud
(86) Numéro de dépôt international: PCT/EP2017/063722
(87) Numéro de publication internationale: WO 2017/211834

(56) Documents cités:
- US-A1- 2010 002 075
- In-Ho Choi ET AL: "Robust Facial States Estimation against Occlusion and Inference of Driver's Drowsiness Using Hidden Markov Model" In: "Lecture Notes in Electrical Engineering", 1 janvier 2015 (2015-01-01), Springer, Germany, XP055324272, ISSN: 1876-1100 ISBN: 978-3-642-05166-1 vol. 352, pages 45-51, DOI: 10.1007/978-3-662-47487-7_7, abrégé figures 1, 3 section 2 section 3 section 4
- IN-HO CHOI ET AL: "Head pose and gaze direction tracking for detecting a drowsy driver", 2014 INTERNATIONAL CONFERENCE ON BIG DATA AND SMART COMPUTING (BIGCOMP), IEEE, 15 janvier 2014 (2014-01-15), pages 241-244, XP032567498, DOI: 10.1109/BIGCOMP.2014.6741444

## Description

### DOMAINE TECHNIQUE AUQUEL SE RAPPORTE L'INVENTION

La présente invention concerne de manière générale le domaine de la surveillance d'un conducteur d'un véhicule de transport.

Elle concerne plus particulièrement un dispositif et une méthode de surveillance de ce conducteur.

Elle trouve une application particulièrement avantageuse pour la surveillance du conducteur d'un véhicule automobile.

### ARRIERE-PLAN TECHNOLOGIQUE

Il est connu de surveiller le conducteur d'un véhicule de transport au moyen d'un dispositif de capture d'image orienté vers la tête du conducteur.

Plus particulièrement, un traitement des images capturées successivement par ce dispositif de capture d'image, au moyen d'une unité de commande électronique, permet de déterminer des informations relatives au comportement du conducteur sous la forme d'un paramètre de surveillance. Ces informations peuvent par exemple comprendre une indication d'une éventuelle baisse de vigilance du conducteur, susceptible de le mener vers un contrôle insuffisant du véhicule.

Il est connu, au cours de ce traitement d'images successives, de déterminer pour chacune de ces images une position occupée par la tête du conducteur, afin de suivre celle-ci au cours du temps.

Mais la capture des images de la tête du conducteur peut être perturbée par la présence d'un obstacle dans le champ du dispositif de capture d'image.

Lorsqu'un tel obstacle passe dans le champ du dispositif de capture d'image, il est connu de réinitialiser le traitement des images par l'unité de commande électronique.

Un inconvénient de ce dispositif et de cette méthode est que la reprise du traitement des images capturées après une telle perturbation peut être longue, ce qui augmente le temps d'interruption de la surveillance du conducteur et dégrade les performances du dispositif de surveillance.

On connaît notamment du document "In-Ho Choi ET AL, "Robust Facial States Estimation against Occlusion and Inference of Driver's Drowsiness Using Hidden Markov Model", Lecture Notes in Electrical Engineering, Germany, Springer, (20150101), vol. 352, pages 45 - 51, doi:10.1007/978-3-662-47487-7_7" un tel dispositif de capture d'image qui en outre est capable d'enregistrer le positionnement de l'obstacle dans l'image. Ce dispositif effectue cette tâche à partir d'une analyse d'image sans l'utilisation de données à disposition de sorte que l'analyse monopolise des ressources.

### OBJET DE L'INVENTION

Afin de remédier aux inconvénients précités de l'état de la technique, la présente invention propose un dispositif et une méthode de surveillance du conducteur limitant le temps d'interruption de la surveillance du conducteur liée à la présence d'un tel obstacle et utilisant les données issues de la position angulaire du volant.

Plus précisément, l'invention propose un dispositif selon la revendication indépendante 1.

L'obstacle qui s'étend dans le champ du dispositif de capture d'image empêche la capture d'une nouvelle image incluant complètement la tête du conducteur. Cet obstacle est ainsi susceptible d'empêcher la détermination d'une nouvelle information de positionnement de la tête du conducteur par le dispositif de surveillance.

Grâce au dispositif selon l'invention, ladite information de positionnement de la tête du conducteur, déterminée à partir de l'image capturée à l'étape a) précédant la survenue de l'obstacle, est enregistrée à l'étape d). Le positionnement de la tête du conducteur correspondant à l'information enregistrée à l'étape d) peut ainsi être utilisé ultérieurement comme un positionnement de référence de la tête du conducteur.

On évite ainsi une réinitialisation de l'unité de commande du dispositif de surveillance lors de la survenue de l'obstacle.

En particulier, ce positionnement de référence peut ainsi être pris en compte lors du traitement d'une image capturée ultérieurement par le dispositif de capture d'image.

Le traitement de la première image capturée après la levée de l'obstacle est ainsi accéléré car, en l'absence de réinitialisation, l'unité de commande traite cette image en tenant compte du positionnement de référence de la tête juste avant la survenue de l'obstacle.

L'information de positionnement relative à la position de la tête du conducteur peut être le paramètre de surveillance déterminé à l'étape b) ou est déterminée à l'étape b) lors de la détermination de ce paramètre de surveillance.

Une fois que l'obstacle libère le champ du dispositif de capture d'image, il est possible à nouveau de déterminer le paramètre de surveillance du conducteur.

Grâce à l'enregistrement de l'information de positionnement de référence à l'étape d) et sa prise en compte à l'étape f) , le paramètre de surveillance du conducteur déterminée à l'étape f), lors de la répétition de l'étape b), est déterminée avantageusement plus rapidement que si l'image capturée lors de la répétition de l'étape a) était traitée sans information préalable quand au positionnement précédent de la tête du conducteur. Le suivi de la tête du conducteur peut en particulier être rétabli avantageusement rapidement une fois que l'obstacle ne s'interpose plus entre la tête du conducteur et le dispositif de capture d'image.

Ladite information de positionnement peut comprendre une information relative à une position et/ou à une orientation de la tête du conducteur. Cette information de positionnement peut aussi comprendre une information relative à une position d'un élément particulier de la tête du conducteur tel que le menton, ou tel que l'un des sourcils ou l'un des yeux du conducteur.

On peut alors prévoir que :
- à l'étape d), ladite information de positionnement de la tête du conducteur comprend une position d'au moins un élément particulier de la tête du conducteur sur l'image capturée à l'étape a) précédente, et que
- à l'étape f), l'unité de commande est programmée en outre pour rechercher ledit élément particulier de la tête du conducteur à l'intérieur d'une zone de taille réduite de ladite image capturée lors de la répétition de l'étape a), la position de cette zone dans cette image étant déterminée en fonction de l'information de positionnement enregistrée à l'étape d).

Comme la position occupée par cet élément particulier avant que l'obstacle ne soit détecté a été enregistrée, à l'étape d), il est alors possible de limiter cette recherche au voisinage de la position occupée précédemment par cet élément particulier de la tête du conducteur. Cela permet alors de détecter cet élément particulier plus rapidement que s'il était recherché dans l'intégralité de la nouvelle image.

D'autres caractéristiques non limitatives et avantageuses du dispositif de surveillance conforme à l'invention sont les suivantes :
- l'unité de commande est programmée en outre pour, à l'étape f), déterminer une dimension au moins de ladite zone en fonction d'un intervalle temporel séparant ladite répétition de l'étape a) et l'étape a) précédente ayant permis la capture de l'image en fonction de laquelle l'information de positionnement enregistrée à l'étape d) a été déterminée ;
- l'unité de commande est programmée en outre pour que, à l'étape f), l'absence d'obstacle dans le champ du dispositif de capture d'image est détectée lorsque ladite partie du volant libère le champ du dispositif de capture d'image, en fonction de ladite position angulaire de ce volant ;
- l'unité de commande est programmée pour, à l'étape c), détecter la présence dudit obstacle lorsque, à l'étape b), le traitement de l'image capturée ne donne aucune information de positionnement de la tête du conducteur.

L'invention propose également une méthode selon la revendication indépendante 6.

Les caractéristiques additionnelles présentées ci-dessus en termes de dispositif peuvent aussi être appliquées à la méthode qui vient d'être décrite.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement un dispositif de surveillance d'un conducteur d'un véhicule vu du dessus, selon l'invention ; et
- la figure 2 représente schématiquement, sous la forme d'un logigramme, des étapes d'une méthode de surveillance de ce conducteur mise en œuvre par le dispositif de surveillance de la figure 1.

### Dispositif

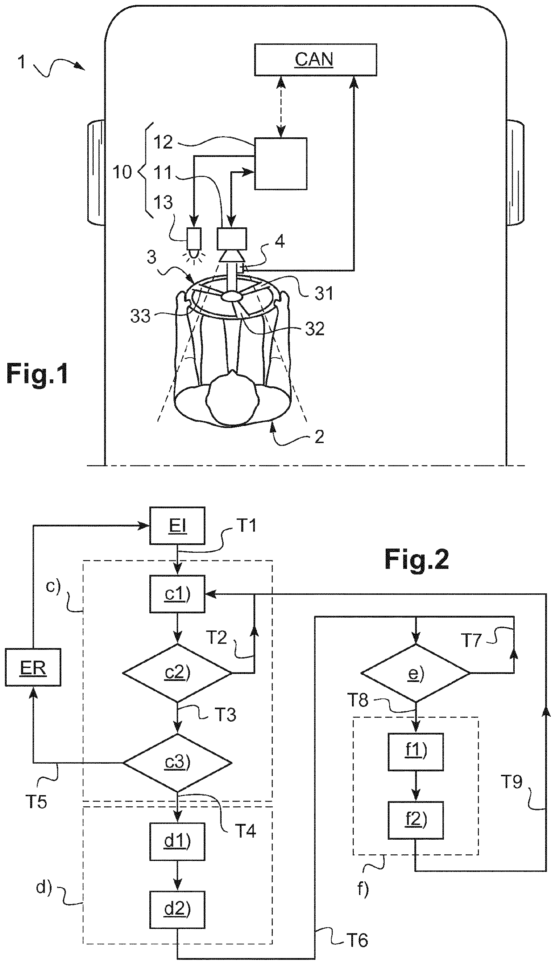

Le dispositif de surveillance 10 selon l'invention, dont les principaux éléments sont représentés schématiquement sur la figure 1, est adapté à être installé dans un véhicule 1 de transport pour surveiller un conducteur 2 de ce véhicule 1.

Ce dispositif de surveillance 10 comprend un dispositif de capture d'image 11 et une unité de commande qui reçoit des informations de ce dispositif de capture d'image 11.

Le dispositif de capture d'image 11 comprend par exemple une caméra numérique ou un appareil photographique numérique, adapté à être disposé de telle sorte que la tête du conducteur 2 du véhicule se trouve dans le champ de ce dispositif de capture d'image 11 lorsque le conducteur 2 conduit le véhicule 1.

On entend par champ du dispositif de capture d'image la région de l'espace dont l'image est capturée par le dispositif de capture d'image.

Lorsqu'il conduit le véhicule 1, le conducteur 2 est installé en face d'un volant 3 de direction de ce véhicule 1.

Ici, le dispositif de capture d'image 11 est adapté plus précisément à être disposé derrière le volant 3 de direction du véhicule 1, par rapport à la tête du conducteur 2.

En position d'usage, le dispositif de surveillance 10 est installé dans ce véhicule 1 de transport, ici un véhicule automobile. Son dispositif de capture d'image 11 est alors positionné en vis-à-vis de la tête du conducteur 2 lorsque le conducteur conduit le véhicule 1, et est orienté vers celle-ci, comme cela est représenté schématiquement sur la figure 1.

En pratique, le dispositif de capture d'image 11 est disposé ici derrière le volant 3 du véhicule 1 par rapport à la tête du conducteur 2. Le dispositif de capture d'image 11 peut par exemple être intégré à un tableau de bord du véhicule 1 situé derrière le volant 3 du véhicule 1 par rapport à la tête du conducteur 2.

Un rayonnement lumineux ambiant présent dans le véhicule 1, provenant de l'extérieur du véhicule, éclaire la tête du conducteur 2.

En outre, le dispositif de surveillance 10 comprend également ici un dispositif d'éclairage 13 du champ du dispositif de capture d'image 11. Ce dispositif d'éclairage 13 est disposé de manière à éclairer une partie au moins du champ du dispositif de capture d'image 11.

Le dispositif d'éclairage 13 autorise avantageusement la capture d'image de la tête du conducteur même lorsque l'intensité du rayonnement lumineux ambiant est insuffisante, en particulier lorsque le véhicule 1 circule de nuit.

L'intensité du rayonnement lumineux ambiant peut en outre présenter d'importantes variations au cours du temps, notamment lorsque le véhicule pénètre dans un tunnel ou un sous-sol ou circule au milieu de constructions. L'utilisation d'un dispositif d'éclairage permet le limiter l'impact de ces variations sur la mise en œuvre du dispositif de surveillance selon l'invention.

En position d'usage, ce dispositif d'éclairage 13 est ainsi positionné lui aussi en vis-à-vis de la tête du conducteur 2 lorsque le conducteur conduit le véhicule 1, et est orienté vers celle-ci de manière à pouvoir l'éclairer.

En pratique, il est disposé par exemple à proximité du dispositif de capture d'image, derrière le volant 3 de direction du véhicule 1, par rapport à la tête du conducteur 2.

Le dispositif de capture d'image 11 est adapté à capturer une image correspondant à un signal lumineux de longueur d'onde égale à au moins l'une des longueurs d'onde émises par le dispositif d'éclairage 13.

En particulier, le dispositif d'éclairage 13 est adapté ici à émettre un rayonnement présentant une longueur d'onde infra-rouge, ce qui permet d'éclairer efficacement la tête du conducteur sans l'éblouir. Le dispositif de capture d'image 11 est alors adapté à capturer une image correspondant à un signal lumineux de longueur d'onde est égale à ladite longueur d'onde infra-rouge.

En variante, le dispositif d'éclairage pourrait toutefois être adapté à émettre un rayonnement dans un domaine de rayonnement du visible, ou à émettre un rayonnement situé à la fois dans un domaine de rayonnement du visible et dans un domaine de rayonnement infra-rouge.

Le dispositif d'éclairage 11 comprend par exemple une ou de plusieurs diodes électroluminescentes.

L'unité de commande 12 du dispositif de surveillance 10 est programmée pour :
a) commander la capture d'au moins une image de la tête du conducteur 2 par le dispositif de capture d'image 11, et pour
b) traiter ladite image capturée à l'étape a) pour déterminer un paramètre de surveillance du conducteur.

Préférentiellement, l'unité de commande 12 est programmée pour commander la capture d'une pluralité d'images successives de la tête du conducteur, et pour traiter ladite pluralité d'images successives pour déterminer le paramètre de surveillance du conducteur 2 plusieurs fois successivement.

Ici, plus précisément, l'unité de commande 12 est programmée pour répéter plusieurs fois les étapes a) et b).

Elle est par exemple programmée pour répéter les étapes a) et b) à intervalle de temps régulier.

Ledit paramètre de surveillance est représentatif d'un comportement du conducteur. De manière générale, il est notamment relatif à la position de la tête du conducteur ou à la position d'un élément particulier de la tête du conducteur.

Le paramètre de surveillance comprend une information de positionnement de la tête du conducteur 2 ou est déterminé en fonction d'une telle information. Il peut comprendre par exemple une information relative à la direction de regard du conducteur 2, par exemple un écart angulaire entre la direction reliant les yeux à la route devant le conducteur et la direction de regard, et/ou une information relative à la fermeture des paupières du conducteur 2, par exemple un pourcentage de fermeture des paupières.

Le paramètre de surveillance peut notamment être représentatif de l'état de vigilance du conducteur du véhicule : il est alors lié au niveau de vigilance et/ou d'éveil du conducteur.

Ainsi, une direction de regard orientée vers la route et des yeux grands ouverts indiquent des niveaux de vigilance et d'éveil satisfaisants, tandis que le regard orienté dans une direction éloignée de la route et des yeux qui se ferment indiquent une distraction ou une somnolence du conducteur.

L'état de vigilance du conducteur peut être déterminé par exemple en évaluant un niveau de vigilance du conducteur, sur la base du paramètre de surveillance de celui-ci, puis en comparant ce niveau de vigilance à un seuil prédéterminé.

L'état de vigilance du conducteur peut aussi être déterminé directement en traitant le paramètre de surveillance avec un algorithme d'apprentissage.

Le dispositif de surveillance peut notamment comprendre des moyens d'alerte (non représentés) adaptés à émettre un signal d'alerte à destination du conducteur lorsque le paramètre de surveillance indique une vigilance insuffisante du conducteur. Cela ne fait pas l'objet de la présente invention et ne sera pas décrit plus en détails ici.

Le dispositif de surveillance peut aussi être adapté à communiquer l'état de vigilance du conducteur à un système d'aide à la conduite, tel qu'un système de régulation de la vitesse du véhicule, afin d'obtenir un fonctionnement de ce système d'aide à la conduite adapté au mieux à l'état de vigilance du conducteur. Par exemple, la vitesse du véhicule commandée par un tel système de régulation de vitesse peut être réduite lorsque le paramètre de surveillance indique une vigilance faible du conducteur.

Le paramètre de surveillance peut aussi être utilisé pour détecter, par analyse du mouvement des lèvres du conducteur, une commande donnée oralement par celui-ci pour commander un équipement du véhicule tel que des essuie-glaces, des feux de route, ou encore un dispositif de chauffage ou de climatisation de l'habitacle.

Le paramètre de surveillance peut également être utilisé pour détecter, sur la base de la direction de regard du conducteur, une intention de ce dernier de mettre en marche un appareil équipant le véhicule, tel qu'un système de navigation, ou un poste de radio.

Ce paramètre de surveillance du conducteur mesuré est déterminé en fonction d'au moins une image de la tête du conducteur capturée par le dispositif de mesure à l'étape a).

Ce paramètre peut être également déterminé à partir de deux images de la tête du conducteur ou plus. Il peut alors également comprendre une information statistique sur un ensemble de données mesurées sur une pluralité de capture d'image de la tête du conducteur.

L'information de positionnement relative à la position de la tête du conducteur peut comprendre une position dans l'espace ou en deux dimensions dans le plan de capture d'image du dispositif de capture d'image. Elle peut également comprendre une orientation angulaire de la tête dans l'espace ou dans ce plan de capture d'image.

Cette information de positionnement peut également comprendre une information relative à une position d'un élément particulier de la tête du conducteur dans un tel référentiel. Cet élément particulier peut correspondre par exemple au menton, à l'un des sourcils, ou à l'un des yeux du conducteur. Il peut correspondre aussi à un point particulier tel que le centre de l'une des pupilles du conducteur.

Le paramètre de surveillance peut également comprendre par exemple une information statistique sur un ensemble de positionnement de la tête du conducteur mesuré à partir d'une pluralité de captures d'image réalisées pendant une durée prédéterminée, un spectre fréquentiel des mouvements de la tête, ou une position moyenne de la tête dans un intervalle de temps donné.

Ainsi, dans le cas où le paramètre de surveillance comprend une information de positionnement de la tête du conducteur, cette information de positionnement est directement déterminée lors de chaque étape b) réalisée par le dispositif de surveillance.

L'information relative à la direction du regard du conducteur peut notamment être relative à la direction du regard du conducteur dans un référentiel lié au dispositif de capture d'image 11 ou dans un référentiel lié à la tête du conducteur 2, ou à la position des pupilles du conducteur dans un tel référentiel.

Lorsque l'unité de commande 12 est programmée pour répéter les étapes a) et b), comme c'est le cas ici, l'information relative à la direction du regard peut également comprendre, par exemple, une durée de fixation d'un même point, c'est-à-dire la durée pendant laquelle la direction du regard dans le référentiel lié à la tête du conducteur est constante, une fréquence des moments de fixation d'un même point, ou encore une fréquence et une durée des saccades des yeux, c'est-à-dire des mouvements des yeux entre deux moments de fixation d'un même point.

L'information relative à la fermeture des paupières du conducteur peut comprendre notamment un degré de fermeture d'une paupière. Lorsque l'unité de commande 12 est comme ici programmée pour répéter les étapes a) et b), cette information relative à la fermeture des paupières peut comprendre également une fréquence de clignement des yeux et/ou une durée de fermeture des paupières, une vitesse de fermeture des paupières, une durée de clignement des yeux, une classification des différents types de clignements des yeux.

Lorsque le paramètre de surveillance est relatif à la fermeture des paupières du conducteur ou à la direction de regard du conducteur, la détermination de ce paramètre à l'étape b) peut impliquer la détermination d'une information de positionnement de la tête du conducteur, par exemple la détermination de la position des yeux du conducteur, la détermination de la position de la pupille du conducteur, ou la détermination de la position de tout élément particulier de la tête du conducteur.

Dans ce cas, de préférence, l'unité de commande 12 est programmée pour déterminer le paramètre de surveillance relatif à la direction du regard du conducteur et/ou à la fermeture des paupières du conducteur en prenant en compte l'information de positionnement de la tête du conducteur déterminée lors de l'étape b) précédente, de manière à repérer plus rapidement les yeux, les pupilles ou plus généralement ledit élément particulier de la tête du conducteur 2 dans l'image traitée.

Plus précisément, l'unité de commande 12 est programmée ici pour, à chaque étape b), effectuer ledit traitement d'image en recherchant ledit élément particulier dans l'image capturée à l'étape a) correspondante, au voisinage de la position de cet élément particulier déterminée lors de l'étape b) précédente. Cela permet de détecter cet élément particulier plus rapidement que s'il était recherché dans l'intégralité de cette image.

En particulier, l'unité de commande 12 est programmée ici pour, à chaque répétition de l'étape b), réaliser cette recherche à l'intérieur d'une zone de taille réduite de l'image capturée à l'étape a) correspondante, la position de cette zone dans cette image étant déterminée en fonction de la position de cet élément particulier déterminée lors de l'étape b) précédente.

Cette zone de taille réduite présente une aire inférieure à l'aire de cette image. Cette zone présente par exemple un contour en forme rectangle, dont la largeur est inférieure à la largeur de cette image et/ou dont la longueur est inférieure à la longueur cette image. La position de cette zone, par exemple la position du centre de son contour rectangulaire, correspond ici à la position de l'élément particulier déterminée lors de ladite étape b) précédente.

Selon une caractéristique particulièrement remarquable, le module de commande 12 est programmé en outre pour réaliser les étapes suivantes :
c) détecter la présence d'un obstacle s'étendant dans le champ du dispositif de capture d'image 11, entre le dispositif de capture d'image 11 et la tête du conducteur 2 ; et
d) lorsque la présence de l'obstacle est détectée, de préférence :
   - d1) commander l'extinction du dispositif d'éclairage 13, et
   - d2) enregistrer une information de positionnement de la tête du conducteur déterminée à partir de l'image capturée à l'étape a) précédant l'étape c).

Cette information de positionnement enregistrée à l'étape f) peut être distincte du paramètre de surveillance déterminé à l'étape b) précédant l'étape c) ou confondue avec le paramètre de surveillance déterminé à l'étape b) précédant l'étape c).

Cette information de positionnement de la tête du conducteur peut comprendre une position dans l'espace ou en deux dimensions dans le plan de capture d'image du dispositif de capture d'image. Elle peut également comprendre une orientation angulaire de la tête dans l'espace ou dans ce plan de capture d'image.

En variante, l'unité de commande peut être programmée pour enregistrer plusieurs informations de positionnement de la tête du conducteur déterminées à partir de plusieurs images capturées à l'étape a) précédant l'étape c).

Lorsque cet obstacle, c'est-à-dire une partie du volant 3 de direction du véhicule, est présent dans le champ du dispositif de capture d'image 11, entre ce dernier et la tête du conducteur, il masque au moins une partie de la tête du conducteur. Une détermination dudit paramètre de surveillance du conducteur en présence de cet obstacle est ainsi nettement moins précise, voire même impossible.

Il est donc particulièrement intéressant que l'unité de commande 12 enregistre ainsi ladite information de positionnement de la tête du conducteur déterminée avant la survenue de l'obstacle.

Par ailleurs, en présence de cet obstacle dans le champ du dispositif de capture d'image 11, maintenir allumé le dispositif d'éclairage 13 de ce champ est le plus souvent inutile, et dans tous les cas ne permet pas d'améliorer substantiellement les performances du dispositif de surveillance en termes de surveillance du conducteur puisque la tête du conducteur 2 est masquée au moins en partie par cet obstacle.

Il est ainsi particulièrement avantageux, lorsque la présence de cet obstacle est détectée, que l'unité de commande 12 commande ainsi l'extinction de ce dispositif d'éclairage 13. Cela permet en effet de limiter l'échauffement ainsi que la consommation énergétique de ce dispositif d'éclairage 13, sans limiter pour cela les performances du dispositif de surveillance 10 en termes de surveillance du conducteur.

Détecter la présence de cet obstacle s'étendant dans le champ du dispositif de capture d'image 11, et adapter le fonctionnement du dispositif de surveillance 10 compte tenu de la présence de cet obstacle permet ainsi d'en optimiser avantageusement les performances.

Préférentiellement, le module de commande 12 est programmé en outre pour, après l'étape c), réaliser les étapes suivantes :
e) détecter l'absence d'obstacle dans le champ du dispositif de capture d'image 11 ; et
f) lorsque l'absence d'obstacle est détectée :
   - f1) commander l'allumage dudit dispositif d'éclairage 13, et
   - f2) répéter les étapes a) et b), et traiter l'image capturée lors de cette répétition de l'étape a) en fonction de ladite information de positionnement de la tête du conducteur enregistrée à l'étape d).

Lorsque l'obstacle détecté à l'étape c) libère le champ du dispositif de capture d'image 11, il est possible à nouveau de déterminer le paramètre de surveillance du conducteur, et de reprendre ainsi un suivi de la surveillance de ce conducteur. Le dispositif d'éclairage 13 est ainsi rallumé.

Grâce à la disposition décrite ci-dessus, le paramètre de surveillance du conducteur déterminé à l'étape f), lors de la répétition de l'étape b), est déterminée avantageusement plus rapidement que si l'image capturée lors de cette répétition de l'étape a) était traitée sans information préalable quand au positionnement précédent de la tête du conducteur.

Les étapes c) à f) sont décrites plus en détail ci-dessous.

### Etapes c) et e)

Ici, l'unité de commande 12 est programmée plus précisément pour :
- à l'étape c), détecter la présence dudit obstacle, et
- à l'étape e), détecter l'absence d'obstacle
en fonction d'une donnée produite par un capteur distinct du dispositif de capture d'image 11.

Ce capteur distinct du dispositif de capture d'image 11 correspond ici à un capteur de position angulaire 4, délivrant une donnée représentative d'une position angulaire du volant 3 de direction du véhicule 1.

L'obstacle s'étendant dans le champ du dispositif de capture d'image 11, entre le dispositif de capture d'image 11 et la tête du conducteur 2, et que l'unité de commande 12 est programmée pour détecter, correspond alors à une partie du volant 31, 32, 33. Cette partie du volant 31, 32, 33 correspond plus précisément à l'un des rayons du volant 3, qui s'étend depuis un moyeu jusqu'à une couronne de ce volant 3, en périphérie de celui-ci.

L'unité de commande 12 est programmée alors pour détecter la présence ou l'absence de cette partie du volant 31, 32, 33 s'étendant dans le champ du dispositif de capture d'image 11, entre le dispositif de capture d'image 11 et la tête du conducteur 2, en fonction de la position angulaire du volant 3.

Plus précisément, l'unité de commande 12 est programmée pour, à l'étape c), lorsque la position angulaire du volant est comprise dans une plage de valeurs donnée, détecter que cette partie du volant 31, 32, 33 s'étend dans le champ du dispositif de capture d'image 11.

L'unité de commande 12 est également programmée pour, à l'étape e), détecter l'absence de cette partie du volant 31, 32, 33 dans le champ du dispositif de capture d'image 11 lorsque la position angulaire du volant est située à l'extérieur de ladite plage de valeurs donnée.

Cette plage de valeurs donnée peut être déterminée lors d'une phase initiale de réglage du dispositif de surveillance 10 précédant sa mise en service. Cette plage de valeurs donnée peut être déterminée sur la base de la géométrie du volant 3, en particulier en fonction d'une étendue d'un secteur angulaire occupé par ladite partie du volant 31, 32, 33. Cette plage de valeurs donnée peut également être déterminée lors d'essais préliminaires du dispositif de surveillance 10, en identifiant des positions angulaires limites au-delà ou en deçà desquelles ladite partie du volant 31, 32, 33 s'étend dans le champ du dispositif de capture d'image 11, entre le dispositif de capture d'image 11 et la tête du conducteur 2.

L'unité de commande 12 est adaptée ici à recevoir la donnée produite par ledit capteur distinct du dispositif de capture d'image 11, par l'intermédiaire du réseau CAN du véhicule 1 que le dispositif de surveillance 10 est destiné à équiper. Ce réseau CAN (selon l'acronyme anglo-saxon de « Controller Area Network ») est un bus multiplexé qui relie les différents capteurs et/ou calculateurs présents dans le véhicule. L'unité de commande 12 pourrait aussi être adaptée à recevoir la donnée produite par ledit capteur distinct du dispositif de capture d'image 11 directement de ce capteur distinct du dispositif de capture d'image 11.

L'unité de commande 12 peut aussi être programmée pour, à l'étape c), détecter la présence de l'obstacle s'étendant dans le champ du dispositif de capture d'image 11 sur la base de l'une des images capturées par le dispositif de capture d'image 11. Plus précisément, l'unité de commande 12 peut être programmée pour détecter la présence dudit obstacle lorsque, à l'étape b), ledit traitement d'image ne conduit à aucun paramètre de surveillance du conducteur. Préférentiellement, l'unité de commande 12 est programmée pour, à l'étape c), détecter la présence de l'obstacle s'étendant dans le champ du dispositif de capture d'image 11 sur la base à la fois de la position angulaire du volant 3, comme expliqué ci-dessus, et du fait que ledit traitement d'image ne conduise à aucun paramètre de surveillance du conducteur.

### Etape d)

Lorsque le paramètre de surveillance est une information de positionnement de la tête du conducteur, l'unité de commande 12 est programmée pour, à la sous-étape d2) de l'étape d), enregistrer la valeur du dernier paramètre de surveillance déterminé avant l'étape c).

Lorsque la détermination du paramètre de surveillance implique la détermination d'une information de positionnement de la tête du conducteur, afin par exemple de repérer les yeux du conducteur dans l'image traitée pour déterminer ensuite sa direction de regard, l'unité de commande 12 est alors programmée pour, à la sous-étape d2) de l'étape d), enregistrer la dernière information de positionnement de la tête du conducteur déterminée avant l'étape c).

Ici, l'information de positionnement de la tête du conducteur enregistrée à la sous-étape d2) comprend en particulier la position dudit élément particulier de la tête du conducteur.

### Etape f)

Lorsque le paramètre de surveillance est une information de positionnement de la tête du conducteur, l'unité de commande 12 est programmée pour, lors de la répétition de l'étape b) effectuée à la sous-étape f2) de l'étape f), traiter l'image capturée lors de la répétition correspondante de l'étape a) en tenant compte de la valeur du dernier paramètre de surveillance déterminé avant l'étape c).

Il s'agit par exemple de déterminer le paramètre de surveillance dans une plage de valeur prédéterminé en fonction de cette valeur du dernier paramètre de surveillance déterminé avant l'étape c).

Lorsque la détermination du paramètre de surveillance implique la détermination d'une information de positionnement de la tête du conducteur, l'unité de commande 12 est programmée pour, lors de la répétition de l'étape b) effectuée à la sous-étape f2) de l'étape f), traiter l'image capturée lors de la répétition correspondante de l'étape a) en tenant compte de la dernière information de positionnement de la tête du conducteur déterminée avant l'étape c).

En variante, l'unité de commande peut être programmée pour tenir compte d'un ensemble de plusieurs informations de positionnement de la tête du conducteur déterminées lors de différentes étapes b) antérieures.

Dans l'exemple envisagé ici, l'information de positionnement de la tête du conducteur comprend la position d'un élément particulier de la tête de ce conducteur.

L'unité de commande 12 est alors par exemple programmée pour, lors de la répétition de l'étape b) effectuée à la sous-étape f2) de l'étape f), rechercher l'élément particulier de la tête du conducteur 2 à l'intérieur d'une zone de taille réduite de l'image capturée lors de la répétition de l'étape a) effectuée à la sous-étape f2) de l'étape f), la position de cette zone dans cette image étant déterminée en fonction de l'information de positionnement enregistrée à l'étape d).

La position de cette zone dans cette image est déterminée plus précisément en fonction de la position dudit élément particulier enregistrée à l'étape d).

Entre :
- ladite répétition de l'étape a) effectuée à l'étape f), et
- l'étape a) précédente ayant permis la capture de l'image en fonction de laquelle l'information de positionnement enregistrée à l'étape d) a été déterminée,
la tête du conducteur 2 est susceptible de s'être déplacée d'une façon généralement limitée.

Ainsi, la position de cet élément particulier dans l'image capturée à l'étape f), lors de la répétition de l'étape a), est probablement proche de la position de cet élément particulier dans l'image ayant permis la détermination de l'information de positionnement de la tête du conducteur enregistrée à l'étape d).

Lors du traitement de cette image à la répétition de l'étape b), l'élément particulier de la tête du conducteur est alors recherché au voisinage de la position qu'il occupait précédemment, et qui a été enregistrée à l'étape d).

Cela permet de détecter cet élément particulier avantageusement plus rapidement que s'il était recherché dans l'intégralité de l'image traitée à l'étape f).

Cette zone de dimensions réduites par rapport aux dimensions de l'image complète présente là encore une aire inférieure à l'aire de ladite image capturée. Cette zone présente par exemple un contour en forme de rectangle, dont la largeur est inférieure à la largeur de ladite image capturée et/ou dont la longueur est inférieure à la longueur cette image. Les dimensions de la zone dépendent de la taille de l'élément particulier de la tête recherché.

La position de cette zone, par exemple la position du centre de son contour en forme de rectangle, correspond ici à la position de l'élément particulier enregistrée à l'étape d).

L'obstacle dont la présence est détectée à l'étape c) peut rester présent dans le champ du dispositif de capture d'image 11 pendant une durée variant d'une situation à une autre. Cette durée peut par exemple être courte lorsque le conducteur 2 manœuvre rapidement le volant 3 pour que le véhicule 1 suive un virage serré. Cette durée peut par contre être plus longue lorsque le conducteur 2 change très progressivement la position angulaire du volant 3, par exemple lors d'un changement de voie de circulation sur autoroute.

Ladite répétition de l'étape a) effectuée à l'étape f) et l'étape a) précédente ayant permis la capture de l'image en fonction de laquelle l'information de positionnement enregistrée à l'étape d) a été déterminée sont ainsi séparées par un intervalle temporel dont la durée peut varier d'une situation à une autre.

Le déplacement possible maximal de la tête du conducteur 2 au cours de cet intervalle temporel est d'autant plus grand que cet intervalle temporel est long.

L'unité de commande 12 est alors programmée ici pour déterminer une dimension au moins de ladite zone en fonction de l'intervalle temporel séparant ladite répétition de l'étape a) effectuée à l'étape f) et l'étape a) précédente ayant permis la capture de l'image en fonction de laquelle l'information de positionnement enregistrée à l'étape d) a été déterminée, préférentiellement de telle sorte que ladite dimension est d'autant plus grande que cet intervalle temporel est long.

Lorsque cette zone est délimitée par un contour en forme de rectangle, cette dimension peut correspondre par exemple à la largeur ou à la longueur de ce rectangle.

### Méthode

La figure 2 représente schématiquement, sous la forme d'un logigramme, des étapes d'une méthode de surveillance selon l'invention, mise en œuvre dans le dispositif de surveillance 10 représenté schématiquement figure 1, et qui a été décrit ci-dessus.

Cette méthode de surveillance comprend les étapes a) et b) décrites ci-dessus, exécutées par l'unité de commande 12. Ces étapes a) et b) ne sont pas représentées sur la figure 2.

Il est prévu ici de répéter plusieurs fois les étapes a) et b), successivement, pour déterminer plusieurs fois successivement ledit paramètre de surveillance du conducteur 2.

Cette méthode de surveillance comprend les étapes c) et d) qui ont été décrites ci-dessus, exécutées par l'unité de commande 12. Cette méthode comprend également les étapes e) et f) décrites précédemment.

L'organisation des différentes étapes prévues dans cette méthode, les unes par rapport aux autres, est décrite maintenant plus en détail.

Cette méthode comprend ici une première sous-étape EI, au cours de laquelle le dispositif de surveillance 10 est initialisé. Au cours de cette initialisation, le module de commande 12 commande l'allumage du dispositif d'éclairage 13. Après cette commande d'allumage, le dispositif d'éclairage 13 reste allumé tant qu'il ne reçoit pas de commande d'extinction.

Une fois le dispositif de surveillance 10 initialisé, la méthode se poursuit par l'étape c) (flèche T1 sur la figure 2).

Ici, l'étape c) comprend plus précisément trois sous-étapes c1), c2) et c3).

L'étape c) commence alors par la sous-étape c1), au cours de laquelle le module de commande 12 reçoit une donnée produite par un capteur distinct du dispositif de capture d'image 11. Ce capteur correspond ici au capteur de position angulaire 4 du volant 3 du véhicule 1 décrit précédemment.

Au cours de la sous-étape c2) suivante, l'unité de commande 12 teste la présence dudit obstacle s'étendant dans le champ du dispositif de capture d'image 11, entre le dispositif de capture d'image et la tête du conducteur 2, sur la base de ladite donnée reçue à la sous-étape c1). Ici, cet obstacle correspond plus précisément à l'une au moins desdites parties du volant 31, 32, 33 susceptibles de s'étendre dans le champ du dispositif de capture d'image 11.

Lorsque l'unité de commande 12 détecte l'absence d'obstacle dans le champ du dispositif de capture d'image 11, ici l'absence de chacune de ces parties du volant 31, 32, 33, alors, l'unité de commande effectue à nouveau la sous-étape c1) (flèche T2 de la figure 2).

Lorsque l'unité de commande 12 détecte au contraire la présence de cet obstacle dans le champ du dispositif de capture d'image 11, ici la présence de l'une de ces parties du volant 31, 32, 33 dans le champ du dispositif de capture d'image 11, alors, la méthode se poursuit par la sous-étape c3) suivante (flèche T3 de la figure 2).

Au cours de la sous-étape c3), l'unité de commande 12 teste si l'une des étapes b) exécutée précédemment, par exemple dans un intervalle de temps prédéterminé avant l'étape c3), n'a conduit à aucun paramètre de surveillance du conducteur.

Lorsque l'unité de commande 12 détermine, au cours de la sous-étape c3), que l'une des étapes b) exécutée précédemment n'a conduit à aucun paramètre de surveillance du conducteur, la présence dudit obstacle dans le champ du dispositif de capture d'image 11 est confirmée. La méthode se poursuit alors par l'étape d) (flèche T4 de la figure 2).

Dans le cas contraire (flèche T5 de la figure 2), l'unité de commande 12 détermine, au cours d'une étape ER, qu'une erreur s'est produite dans l'exécution de la méthode, puisque les résultats des sous-étapes c2) et c3) sont alors incohérents entre eux. En effet, la présence de cet obstacle dans le champ du dispositif de capture d'image 11 masque, au moins en partie, la tête du conducteur 2 dans au moins une image capturée lors de l'une des exécutions de l'étape a) précédentes, et empêche ainsi la détermination du paramètre de surveillance par traitement de cette image, ce qui aurait dû alors être détecté à l'étape c3). Lorsqu'il est ainsi déterminé qu'une erreur s'est produite dans l'exécution de la méthode, cette exécution reprend à l'étape EI.

Selon une variante non représentée de cette méthode de surveillance, l'étape c) peut comprendre seulement les sous-étapes c1) et c2), les sous-étapes c3) et ER étant alors omises.

Au cours de cette méthode, on peut prévoir, après l'étape c3), de suspendre temporairement la répétition des étapes a) et b), puisque ledit obstacle masque au moins en partie la tête du conducteur. On peut prévoir aussi de continuer à répéter les étapes a) et b), après cette étape c3), bien que la présence de cet obstacle ait été détectée.

L'étape d) comprend de préférence les deux sous-étapes d1) et d2) décrites précédemment.

Au cours de la sous-étape d1), le module de commande 12 commande l'extinction du dispositif d'éclairage 13. Après cette commande d'extinction, le dispositif d'éclairage 13 reste éteint tant qu'il ne reçoit pas de commande d'allumage.

Au cours de la sous-étape suivante d2), le module de commande 12 enregistre l'information de positionnement relative à la position de la tête du conducteur 2 déterminée à partir de l'image capturée à l'étape a) précédant ladite détection de la présence de l'obstacle s'étendant dans le champ du dispositif de capture d'image 11.

Lorsque le paramètre de surveillance est une information de positionnement de la tête du conducteur, l'unité de commande 12 enregistre alors la valeur du dernier paramètre de surveillance déterminé avant l'étape c3).

Plus précisément, le module de commande 12 enregistre alors la valeur du paramètre de surveillance de la tête du conducteur 2 déterminée lors de la dernière étape b) réalisée avec succès avant la détection de cet obstacle, c'est-à-dire lors de la dernière étape b) ayant permis, avant la détection de cet obstacle, de déterminer le paramètre de surveillance du conducteur. Ici, au cours de l'étape b) qui suit immédiatement cette dernière étape b) réalisée avec succès, aucun paramètre de surveillance du conducteur 2 n'est déterminé, ce qui est détecté à la sous-étape c3).

Lorsque la détermination du paramètre de surveillance implique la détermination d'une information de positionnement de la tête du conducteur, l'unité de commande 12 enregistre alors la dernière information de positionnement de la tête du conducteur déterminée avant l'étape c). Cette dernière information de positionnement est déterminée à partir de l'image capturée à l'étape a) correspondant à la dernière étape b) réalisée avec succès avant la détection dudit obstacle.

Ici, plus particulièrement, l'information de positionnement de la tête du conducteur enregistrée à la sous-étape d2) comprend la position dudit élément particulier de la tête du conducteur.

Après l'étape d), cette méthode de surveillance se poursuit par l'étape e) (flèche T6 de la figure 2). Au cours de l'étape e), l'unité de commande 12 teste l'absence d'obstacle s'étendant dans le champ du dispositif de capture d'image 11, entre le dispositif de capture d'image et la tête du conducteur 2.

Ici, plus précisément, l'unité de commande 12 teste à l'étape e) l'absence de chacune desdites parties du volant 31, 32, 33 du champ du dispositif de capture d'image 11, sur la base de la position angulaire du volant 3.

Lorsque l'unité de commande 12 détecte ainsi la présence dudit obstacle s'étendant dans le champ du dispositif de capture d'image 11, alors, l'unité de commande 12 exécute à nouveau l'étape e) (flèche T7 de la figure 2).

Lorsque l'unité de commande 12 détecte au contraire, à l'étape e), l'absence d'obstacle dans le champ du dispositif de capture d'image 11, la méthode se poursuit alors par l'étape f) (flèche T8 de la figure 2).

L'étape f) comprend ici les deux sous-étapes f1) et f2) décrites précédemment.

Au cours de la sous-étape f1), le module de commande 12 commande l'allumage du dispositif d'éclairage 13. Après cette commande d'allumage, le dispositif d'éclairage 13 reste allumé tant qu'il ne reçoit pas de commande d'extinction.

Au cours de la sous-étape f2), les étapes a) et b) sont répétées (cela n'est pas représenté sur la figure 2). Lors de cette répétition de l'étape b), l'image capturée lors de la répétition correspondante de l'étape a) est traitée en fonction de ladite information de positionnement de la tête du conducteur enregistrée à la sous-étape d2) de l'étape d).

Plus précisément, ici, lors de cette répétition de l'étape b), l'élément particulier de la tête du conducteur mentionné ci-dessus est recherché dans ladite image capturée lors de la répétition correspondante de l'étape a), à l'intérieur de la zone de taille réduite de cette image qui a été décrite en détail précédemment. La position de cette zone dans cette image est déterminée en fonction de l'information de positionnement enregistrée lors de la sous-étape d2) de l'étape d).

Ici, il est prévu en outre de déterminer une dimension au moins de cette zone en fonction de l'intervalle temporel séparant ladite répétition de l'étape a), à la sous-étape f2), et l'étape a) ayant permis la capture de l'image en fonction de laquelle l'information de positionnement enregistrée à l'étape d) a été déterminée, comme expliqué plus en détail ci-dessus, lors de la description du dispositif de surveillance 10 dans lequel cette méthode de surveillance est mise en œuvre.

Après l'étape f), cette méthode de surveillance reprend à l'étape c) (flèche T9 de la figure 2), ici plus précisément à la sous-étape c1) de l'étape c).

Le dispositif et la méthode selon l'invention peuvent également être mis en œuvre pour la surveillance du conducteur d'un véhicule de transport autre que les véhicules automobiles, tels que par exemple les camions, les trains, les bateaux comme les péniches, les tramways ou les bus.

En variante, les étapes d1) et f1) sont optionnelles et les étapes d2) et f2) seules sont réalisées pour optimiser les performances du dispositif de surveillance selon l'invention.

## Revendications

1. Dispositif de surveillance (10) d'un conducteur (2) d'un véhicule (1) de transport comprenant :
- un dispositif de capture d'image (11) adapté à être disposé de telle sorte que la tête du conducteur (2) du véhicule (1) se trouve dans le champ de ce dispositif de capture d'image (11) lorsque le conducteur (2) conduit le véhicule (1), ledit véhicule (1) de transport comprenant un volant (3) de direction, ledit dispositif de capture d'image (11) étant disposé derrière ce volant (3) par rapport à la tête du conducteur (2) et
- une unité de commande (12) programmée pour :
a) commander la capture d'au moins une image de la tête du conducteur (2) par le dispositif de capture d'image (11), et pour
b) traiter ladite image capturée à l'étape a) pour déterminer un paramètre de surveillance du conducteur (2),
**caractérisé en ce que** l'unité de commande (12) est programmée en outre pour :
c) détecter la présence d'un obstacle s'étendant dans le champ du dispositif de capture d'image (11) entre le dispositif de capture d'image (11) et la tête du conducteur (2), ledit obstacle comprenant une partie du volant (31, 32, 33), la présence de ladite partie de ce volant (31, 32, 33) s'étendant dans le champ du dispositif de capture d'image (11) entre le dispositif de capture d'image (11) et la tête du conducteur (2) étant détectée en fonction d'une position angulaire de ce volant (3) délivrée par un capteur de position angulaire (4) distinct dudit dispositif de capture d'image (11) et, lorsque la position angulaire du volant (3) est comprise dans une plage de valeurs donnée, détecter que la partie du volant (31, 32, 33) s'étend dans le champ du dispositif de capture d'image (11),
d) lorsque la présence de l'obstacle est détectée, enregistrer une information de positionnement relative à la position de la tête du conducteur (2) déterminée à partir de l'image capturée à l'étape a) précédente,
l'unité de commande (12) étant programmée en outre pour, après l'étape d) :
e) détecter l'absence d'obstacle dans le champ du dispositif de capture d'image (11) en fonction de la position angulaire du volant (3) délivrée par le capteur de position angulaire (4) et, lorsque la position angulaire du volant (3) est située à l'extérieur de la plage de valeurs donnée, détecter l'absence de la partie du volant (31, 32, 33) dans le champ du dispositif de capture d'image (11), et
f) lorsque l'absence d'obstacle est détectée, répéter les étapes a) et b), et, lors de la répétition de l'étape b), traiter l'image capturée lors de la répétition de l'étape a) en fonction de ladite information de positionnement de la tête du conducteur enregistrée à l'étape d).

2. Dispositif de surveillance (10) selon la revendication 1, dans lequel :
- à l'étape d), ladite information de positionnement de la tête du conducteur (2) comprend une position d'au moins un élément particulier de la tête du conducteur (2) sur l'image capturée à l'étape a) précédente, et,
- à l'étape f), l'unité de commande (12) est programmée en outre pour rechercher ledit élément particulier de la tête du conducteur (2) à l'intérieur d'une zone de taille réduite de ladite image capturée lors de la répétition de l'étape a), la position de cette zone dans cette image étant déterminée en fonction de l'information de positionnement enregistrée à l'étape d).

3. Dispositif de surveillance (10) selon la revendication 2, dans lequel l'unité de commande (12) est programmée en outre pour, à l'étape f), déterminer une dimension au moins de ladite zone en fonction d'un intervalle temporel séparant ladite répétition de l'étape a) et l'étape a) précédente ayant permis la capture de l'image en fonction de laquelle l'information de positionnement enregistrée à l'étape d) a été déterminée.

4. Dispositif de surveillance (10) selon l'une des revendications 1à 3, dans lequel l'unité de commande (12) est programmée en outre pour que, à l'étape f), l'absence d'obstacle dans le champ du dispositif de capture d'image (11) est détectée lorsque ladite partie du volant (31, 32, 33) libère le champ du dispositif de capture d'image (11), en fonction de ladite position angulaire de ce volant (3).

5. Dispositif de surveillance (10) selon l'une des revendications 1 à 4, dans lequel l'unité de commande (12) est programmée pour, à l'étape c), détecter la présence dudit obstacle lorsque, à l'étape b), le traitement de l'image capturée ne donne aucune information de positionnement de la tête du conducteur (2).

6. Méthode de surveillance d'un conducteur (2) d'un véhicule (1) de transport comprenant les étapes suivantes :
a) commander la capture d'au moins une image de la tête du conducteur (2) par un dispositif de capture d'image (11) disposé de telle sorte que la tête du conducteur (2) du véhicule (1) se trouve dans le champ de ce dispositif de capture d'image (11) lorsque le conducteur (2) conduit le véhicule (1), ledit véhicule (1) de transport comprenant un volant (3) de direction, ledit dispositif de capture d'image (11) étant disposé derrière ce volant (3) par rapport à la tête du conducteur (2), et
b) traiter ladite image capturée à l'étape a) pour déterminer un paramètre de surveillance du conducteur (2),
**caractérisée en ce que** cette méthode comprend en outre les étapes suivantes :
c) détecter la présence d'un obstacle s'étendant dans le champ du dispositif de capture d'image (11) entre le dispositif de capture d'image (11) et la tête du conducteur (2), ledit obstacle comprenant une partie du volant (31, 32, 33), la présence de ladite partie de ce volant (31, 32, 33) s'étendant dans le champ du dispositif de capture d'image (11) entre le dispositif de capture d'image (11) et la tête du conducteur (2) étant détectée en fonction d'une position angulaire de ce volant (3) délivrée par un capteur de position angulaire (4) distinct dudit dispositif de capture d'image (11) et, lorsque la position angulaire du volant (3) est comprise dans une plage de valeurs donnée, détecter que la partie du volant (31, 32, 33) s'étend dans le champ du dispositif de capture d'image (11), et
d) lorsque la présence de l'obstacle est détectée, enregistrer une information de positionnement de la tête du conducteur (2) déterminée à partir de l'image capturée lors de l'étape a) précédente,
la méthode de surveillance comprenant en outre, après l'étape d), les étapes suivantes :
e) détecter l'absence d'obstacle dans le champ du dispositif de capture d'image (11) en fonction de la position angulaire du volant (3) délivrée par le capteur de position angulaire (4) et, lorsque la position angulaire du volant (3) est située à l'extérieur de la plage de valeurs donnée, détecter l'absence de la partie du volant (31, 32, 33) dans le champ du dispositif de capture d'image (11), et
f) lorsque l'absence d'obstacle est détectée, répéter les étapes a) et b), et, lors de la répétition de l'étape b), traiter l'image capturée lors de la répétition de l'étape a) en fonction de ladite information de positionnement de la tête du conducteur enregistrée à l'étape d).

## Patentansprüche

1. Vorrichtung zur Überwachung (10) eines Fahrers (2) eines Transportfahrzeugs (1) umfassend:
- eine Bildaufnahmevorrichtung (11), die geeignet ist, so angeordnet zu sein, dass sich der Kopf des Fahrers (2) des Fahrzeugs (1) im Feld dieser Bildaufnahmevorrichtung (11) befindet, wenn der Fahrer (2) das Fahrzeug (1) fährt, wobei das Transportfahrzeug (1) ein Lenkrad (3) umfasst, wobei die Bildaufnahmevorrichtung (11) hinter diesem Lenkrad (3) bezogen auf den Kopf des Fahrers (2) angeordnet ist, und
- eine Steuereinheit (12), die dafür programmiert ist:
a) die Aufnahme wenigstens eines Bilds des Kopfes des Fahrers (2) durch die Bildaufnahmevorrichtung (11) zu steuern, und
b) das bei Schritt a) aufgenommene Bild zu verarbeiten, um einen Parameter zur Überwachung des Fahrers (2) zu bestimmen,
**dadurch gekennzeichnet, dass** die Steuereinheit (12) ferner für Folgendes programmiert ist:
c) Detektieren des Vorhandenseins eines Hindernisses, das sich im Feld der Bildaufnahmevorrichtung (11) zwischen der Bildaufnahmevorrichtung (11) und dem Kopf des Fahrers (2) erstreckt, wobei das Hindernis einen Abschnitt des Lenkrads (31, 32, 33) umfasst, wobei das Vorhandensein des Abschnitts dieses Lenkrads (31, 32, 33), der sich im Feld der Bildaufnahmevorrichtung (11) zwischen der Bildaufnahmevorrichtung (11) und dem Kopf des Fahrers (2) erstreckt, je nach einer Winkelposition dieses Lenkrads (3) detektiert wird, die von einem Winkelpositionssensor (4) geliefert wird, der von der Bildaufnahmevorrichtung (11) gesondert ist, und, wenn die Winkelposition des Lenkrads (3) in einem bestimmten Wertebereich liegt, Detektieren, dass sich der Abschnitt des Lenkrads (31, 32, 33) im Feld der Bildaufnahmevorrichtung (11) erstreckt,
d) wenn das Vorhandensein des Hindernisses detektiert ist, Aufzeichnen einer Information zur Positionierung in Bezug auf die Position des Kopfes des Fahrers (2), die anhand des Bilds bestimmt wird, das im vorhergehenden Schritt a) aufgenommen wurde,
wobei die Steuereinheit (12) ferner für Folgendes nach dem Schritt d) programmiert ist:
e) Detektieren des Nichtvorhandenseins eines Hindernisses im Feld der Bildaufnahmevorrichtung (11) je nach der Winkelposition des Lenkrads (3), die vom Winkelpositionssensor (4) geliefert wird, und wenn sich die Winkelposition des Lenkrads (3) außerhalb des bestimmten Wertebereichs befindet, Detektieren des Nichtvorhandenseins des Abschnitts des Lenkrads (31, 32, 33) im Feld der Bildaufnahmevorrichtung (11), und
f) wenn das Nichtvorhandensein eines Hindernisses detektiert ist, Wiederholen der Schritte a) und b), und, bei der Wiederholung des Schritts b), Verarbeiten des Bilds, das bei der Wiederholung des Schritts a) aufgenommen wurde, je nach der Information zur Positionierung des Kopfes des Fahrers, die bei Schritt d) aufgezeichnet wurde.

2. Überwachungsvorrichtung (10) nach Anspruch 1, wobei:
- bei Schritt d) die Information zur Positionierung des Kopfes des Fahrers (2) eine Position wenigstens eines bestimmten Elements des Kopfes des Fahrers (2) auf dem Bild umfasst, das beim vorhergehenden Schritt a) aufgenommen wurde, und,
- bei Schritt f) die Steuereinheit (12) ferner dafür programmiert ist, das bestimmte Element des Kopfes des Fahrers (2) innerhalb eines Bereichs verringerter Größe des Bilds zu suchen, das bei der Wiederholung des Schritts a) aufgenommen wurde, wobei die Position dieses Bereichs in diesem Bild je nach der Positionierungsinformation bestimmt wird, die bei Schritt d) aufgezeichnet wurde.

3. Überwachungsvorrichtung (10) nach Anspruch 2, wobei die Steuereinheit (12) ferner dafür programmiert ist, bei Schritt f) eine Abmessung wenigstens des Bereichs je nach einem Zeitintervall zu bestimmen, das die Wiederholung des Schritts a) und des vorhergehenden Schritts a) trennt, der die Aufnahme des Bilds gestattet hat, je nach welchem die Positionierungsinformation bestimmt wurde, die bei Schritt d) aufgezeichnet wurde.

4. Überwachungsvorrichtung (10) nach einem der Ansprüche 1 bis 3, wobei die Steuereinheit (12) ferner so programmiert ist, dass bei Schritt f) das Nichtvorhandensein eines Hindernisses im Feld der Bildaufnahmevorrichtung (11) detektiert wird, wenn der Abschnitt des Lenkrads (31, 32, 33) das Feld der Bildaufnahmevorrichtung (11) freigibt, je nach der Winkelposition dieses Lenkrads (3).

5. Überwachungsvorrichtung (10) nach einem der Ansprüche 1 bis 4, wobei die Steuereinheit (12) dafür programmiert ist, bei Schritt c) das Vorhandensein des Hindernisses zu detektieren, wenn bei Schritt b) die Verarbeitung des aufgenommenen Bilds keine Information zur Positionierung des Kopfes des Fahrers (2) liefert.

6. Verfahren zur Überwachung eines Fahrers (2) eines Transportfahrzeugs (1) umfassend die folgenden Schritte:
a) Steuern der Aufnahme wenigstens eines Bilds des Kopfes des Fahrers (2) durch eine Bildaufnahmevorrichtung (11), die so angeordnet ist, dass sich der Kopf des Fahrers (2) des Fahrzeugs (1) im Feld dieser Bildaufnahmevorrichtung (11) befindet, wenn der Fahrer (2) das Fahrzeug (1) fährt, wobei das Transportfahrzeug (1) ein Lenkrad (3) umfasst, wobei die Bildaufnahmevorrichtung (11) hinter diesem Lenkrad (3) bezogen auf den Kopf des Fahrers (2) angeordnet ist, und
b) das bei Schritt a) aufgenommene Bild zu verarbeiten, um einen Parameter zur Überwachung des Fahrers (2) zu bestimmen,
**dadurch gekennzeichnet, dass** dieses Verfahren ferner die folgenden Schritte umfasst:
c) Detektieren des Vorhandenseins eines Hindernisses, das sich im Feld der Bildaufnahmevorrichtung (11) zwischen der Bildaufnahmevorrichtung (11) und dem Kopf des Fahrers (2) erstreckt, wobei das Hindernis einen Abschnitt des Lenkrads (31, 32, 33) umfasst, wobei das Vorhandensein des Abschnitts dieses Lenkrads (31, 32, 33), der sich im Feld der Bildaufnahmevorrichtung (11) zwischen der Bildaufnahmevorrichtung (11) und dem Kopf des Fahrers (2) erstreckt, je nach einer Winkelposition dieses Lenkrads (3) detektiert wird, die von einem Winkelpositionssensor (4) geliefert wird, der von der Bildaufnahmevorrichtung (11) gesondert ist, und, wenn die Winkelposition des Lenkrads (3) in einem bestimmten Wertebereich liegt, Detektieren, dass sich der Abschnitt des Lenkrads (31, 32, 33) im Feld der Bildaufnahmevorrichtung (11) erstreckt, und
d) wenn das Vorhandensein des Hindernisses detektiert ist, Aufzeichnen einer Information zur Positionierung des Kopfes des Fahrers (2), die anhand des Bilds bestimmt wird, das im vorhergehenden Schritt a) aufgenommen wurde,
wobei das Überwachungsverfahren ferner nach dem Schritt d) die folgenden Schritte umfasst:
e) Detektieren des Nichtvorhandenseins eines Hindernisses im Feld der Bildaufnahmevorrichtung (11) je nach der Winkelposition des Lenkrads (3), die vom Winkelpositionssensor (4) geliefert wird, und wenn sich die Winkelposition des Lenkrads (3) außerhalb des bestimmten Wertebereichs befindet, Detektieren des Nichtvorhandenseins des Abschnitts des Lenkrads (31, 32, 33) im Feld der Bildaufnahmevorrichtung (11), und
f) wenn das Nichtvorhandensein eines Hindernisses detektiert ist, Wiederholen der Schritte a) und b), und, bei der Wiederholung des Schritts b), Verarbeiten des Bilds, das bei der Wiederholung des Schritts a) aufgenommen wurde, je nach der Information zur Positionierung des Kopfes des Fahrers, die bei Schritt d) aufgezeichnet wurde.

## Claims

1. Monitoring device (10) for monitoring a driver (2) of a transport vehicle (1), comprising:
- an image-capturing device (11) designed to be arranged in such a way that the head of the driver (2) of the vehicle (1) is located in the field of this image-capturing device (11) when the driver (2) is driving the vehicle (1), said transport vehicle (1) comprising a steering wheel (3), said image-capturing device (11) being arranged behind this wheel (3) with respect to the head of the driver (2) and
- a control unit (12) programmed to:
a) order at least one image of the head of the driver (2) to be captured by the image-capturing device (11), and to
b) process said image captured in step a) so as to determine a monitoring parameter for the driver (2),
**characterized in that** the control unit (12) is further programmed to:
c) detect the presence of an obstacle extending in the field of the image-capturing device (11) between the image-capturing device (11) and the head of the driver (2), said obstacle comprising a portion (31, 32, 33) of the wheel, the presence of said portion (31, 32, 33) of this wheel extending in the field of the image-capturing device (11) between the image-capturing device (11) and the head of the driver (2) being detected in accordance with an angular position of this wheel (3) delivered by an angular position sensor (4) which is distinct from said image-capturing device (11) and, when the angular position of the wheel (3) is contained in a given range of values, detect that the portion (31, 32, 33) of the wheel extends in the field of the image-capturing device (11),
d) when the presence of the obstacle is detected, record positioning information relating to the position of the head of the driver (2) determined on the basis of the image captured in the preceding step a),
the control unit (12) being further programmed to, after step d):
e) detect the absence of obstacles in the field of the image-capturing device (11) in accordance with the angular position of the wheel (3) delivered by the angular position sensor (4) and, when the angular position of the wheel (3) is outside the given range of values, detect the absence of the portion (31, 32, 33) of the wheel in the field of the image-capturing device (11), and
f) when the absence of obstacles is detected, repeat steps a) and b), and, during the repetition of step b), process the image captured during the repetition of step a) in accordance with said positioning information for the head of the driver recorded in step d).

2. Monitoring device (10) according to Claim 1, wherein:
- in step d), said positioning information for the head of the driver (2) comprises a position of at least one particular element of the head of the driver (2) in the image captured in the preceding step a), and,
- in step f), the control unit (12) is further programmed to search for said particular element of the head of the driver (2) inside a small-sized region of said image captured during the repetition of step a), the position of this region in this image being determined in accordance with the positioning information recorded in step d).

3. Monitoring device (10) according to Claim 2, wherein the control unit (12) is further programmed to, in step f), determine one dimension at least of said region in accordance with a time interval separating said repetition of step a) and the preceding step a) which made it possible to capture the image in accordance with which the positioning information recorded in step d) was determined.

4. Monitoring device (10) according to one of Claims 1 to 3, wherein the control unit (12) is further programmed so that, in step f), the absence of obstacles in the field of the image-capturing device (11) is detected when said portion (31, 32, 33) of the wheel vacates the field of the image-capturing device (11), in accordance with said angular position of this wheel (3).

5. Monitoring device (10) according to one of Claims 1 to 4, wherein the control unit (12) is programmed to, in step c), detect the presence of said obstacle when, in step b), processing the captured image does not give any positioning information for the head of the driver (2).

6. Monitoring method for monitoring a driver (2) of a transport vehicle (1), comprising the following steps:
a) ordering at least one image of the head of the driver (2) to be captured by an image-capturing device (11) arranged in such way that the head of the driver (2) of the vehicle (1) is located in the field of this image-capturing device (11) when the driver (2) is driving the vehicle (1), said transport vehicle (1) comprising a steering wheel (3), said image-capturing device (11) being arranged behind this wheel (3) with respect to the head of the driver (2), and
b) processing said image captured in step a) so as to determine a monitoring parameter for the driver (2),
**characterized in that** this method further comprises the following steps:
c) detecting the presence of an obstacle extending in the field of the image-capturing device (11) between the image-capturing device (11) and the head of the driver (2), said obstacle comprising a portion (31, 32, 33) of the wheel, the presence of said portion (31, 32, 33) of this wheel extending in the field of the image-capturing device (11) between the image-capturing device (11) and the head of the driver (2) being detected in accordance with an angular position of this wheel (3) delivered by an angular position sensor (4) which is distinct from said image-capturing device (11) and, when the angular position of the wheel (3) is contained in a given range of values, detecting that the portion (31, 32, 33) of the wheel extends in the field of the image-capturing device (11), and
d) when the presence of the obstacle is detected, recording positioning information for the head of the driver (2) determined on the basis of the image captured during the preceding step a),
the monitoring method further comprising, after step d), the following steps:
e) detecting the absence of obstacles in the field of the image-capturing device (11) in accordance with the angular position of the wheel (3) delivered by the angular position sensor (4) and, when the angular position of the wheel (3) is outside the given range of values, detecting the absence of the portion (31, 32, 33) of the wheel in the field of the image-capturing device (11), and
f) when the absence of obstacles is detected, repeating steps a) and b), and, during the repetition of step b), processing the image captured during the repetition of step a) in accordance with said positioning information for the head of the driver recorded in step d).
